# FASCICULE DE BREVET EUROPEEN

(11) **EP 3 630 556 B1**
(45) Date de publication et mention de la délivrance du brevet: **28.04.2021**
(21) Numéro de dépôt: 18725252.3
(22) Date de dépôt: 24.05.2018
(51) Int. Cl.: B60S 1/38, B60S 1/08

(54) **DISPOSITIF DE COMMANDE ET DE REGULATION D'UN CIRCUIT CHAUFFANT DE BALAI D'ESSUI-GLACE**
VORRICHTUNG ZUR STEUERUNG UND REGELUNG EINES SCHEIBENWISCHERBLATTHEIZKREISES
DEVICE FOR CONTROLLING AND REGULATING A WINDSCREEN WIPER BLADE HEATING CIRCUIT

(30) Priorité: 24.05.2017 FR 1754646
(43) Date de publication de la demande: 08.04.2020
(73) Titulaire: Valeo Systèmes d'Essuyage, 78322 Le Mesnil Saint Denis (FR)
(72) Inventeur: HOUSSAT, Stéphane, 63500 Issoire (FR); GAUCHER, Vincent, 63500 Issoire (FR); MOULEYRE, Guillaume, 63500 Issoire (FR); TERRASSE, William, 63500 Issoire (FR)
(74) Mandataire: Valeo Visibility
(86) Numéro de dépôt international: PCT/EP2018/063738
(87) Numéro de publication internationale: WO 2018/215631

(56) Documents cités:
- WO-A1-2011/079990
- WO-A1-2014/121061
- DE-A1-102008 039 690
- DE-A1-102008 049 270

## Description

### DOMAINE TECHNIQUE DE L'INVENTION

L'invention concerne un dispositif de commande et de régulation d'un circuit chauffant de balai d'essuie-glace, ledit circuit chauffant comportant au moins un élément résistif intégré ou associé au balai, ledit dispositif de commande et de régulation formant un ensemble autonome apte à être monté aussi bien en première qu'en deuxième monte sur un véhicule.

### ARRIERE PLAN TECHNIQUE DE L'INVENTION

Il est connu de chauffer un balai d'essuie-glace de véhicule automobile pour dégivrer le balai et sa structure notamment et améliorer les performances d'essuyage de la vitre dont l'essuieglace doit assurer le nettoyage.

Lorsque le balai d'essuie-glace comporte des canaux internes de distribution d'un liquide de lave-glace, le chauffage du balai d'essuie-glace peut en outre permettre de chauffer le liquide de lave-glace avant sa pulvérisation ou projection sur la surface extérieure de la vitre, ce qui permet aussi de faciliter les opérations de dégivrage de la vitre et peut éventuellement permettre d'éviter l'utilisation d'une raclette à usage manuel.

Les moyens de chauffage classiquement employés comportent essentiellement un circuit électrique chauffant intégrant un élément résistif chauffant, tel qu'une résistance électrique de chauffage, qui lorsqu'il est alimenté en courant électrique, produit de la chaleur qui est dissipée autour de l'élément résistif et/ou transmise, au moins partiellement, aux éléments avec lesquels celui-ci est en contact, notamment par exemple la lame du balai et/ou sa structure de maintien.

Par exemple, on a déjà proposé d'équiper la vertèbre de cintrage d'un balai d'essuie-glace avec des moyens de chauffage se présentant sous la forme d'un film rapporté qui est collé sur au moins une des deux faces planes opposées de la vertèbre, et qui comporte un circuit électrique chauffant.

Le circuit électrique chauffant comporte par exemple essentiellement une boucle d'un fil électrique conducteur ou d'une piste conductrice déposée ou imprimée sur un substrat et dont les extrémités sont reliées à des bornes d'alimentation en courant électrique reliées à la batterie du véhicule.

Selon une première variante, le pilotage et la régulation du circuit-chauffant de balais d'essuie-glace est une fonction gérée directement par le conducteur du véhicule, via un interrupteur accessible au tableau de commande dans le cockpit du véhicule pour ouvrir, respectivement fermer, le circuit d'alimentation électrique du circuit chauffant des balais, de manière analogue au circuit de dégivrage d'un pare-brise. De préférence, le circuit d'alimentation peut être fermé automatiquement après une durée déterminée de chauffe ou si la température extérieure est supérieure à une température de consigne, par exemple par l'intermédiaire du calculateur électronique du véhicule et de capteurs idoines associés.

Selon une seconde variante, la fonction de pilotage et de régulation du circuit-chauffant de balais d'essuie-glace peut aussi être gérée indépendamment du conducteur du véhicule, par le calculateur électronique et le circuit électrique du véhicule. Pour ce faire, des mesures de la température extérieure au véhicule et de sa vitesse sont préférentiellement intégrées par le calculateur pour piloter un cycle d'alimentation du circuit chauffant tenant compte de ces paramètres.

Que ce soit dans la première ou seconde variante évoquées ci-avant, la fonction pilotage et la régulation du circuit-chauffant de balais d'essuie-glace est majoritairement limitée à l'équipement dit en « première monte » de véhicules.

En effet, ce pilotage requiert pour être efficace énergétiquement et respectueux de l'intégrité des balais la connaissance de la température extérieure, afin que le circuit chauffant ne soit actif que dans des conditions climatiques le requérant, la connaissance de la résistance ou de la puissance du circuit chauffant et, de préférence, de la vitesse du véhicule.

Il est donc nécessaire de régler ces paramètres et/ou d'équiper le véhicule et son système électrique des dispositifs de mesure adaptés à cette gestion du pilotage du chauffage des balais d'essuie-glace au stade de la production du véhicule pour ne pas requérir de coûteux travaux ultérieurs aux utilisateurs. WO-A-2014/121061 montre le préambule de la revendication 1.

Il serait cependant souhaitable de pouvoir démocratiser l'utilisation de balais d'essuie-glace dotés d'un circuit chauffant afin que les consommateurs puissent en équiper leur véhicule en fonction de leurs besoins particuliers et de la saisonnalité et donc sans que le véhicule n'intègre une architecture électrique ni une programmation de calculateur spécifique à cette fin dès son achat.

L'invention vise à proposer une solution simple, efficace et économique à ce besoin, qui soit applicable à tout véhicule automobile, notamment en « deuxième monte ».

### BREF RESUME DE L'INVENTION

La présente invention atteint son but par la proposition, selon un premier objet, d'un dispositif autonome de commande d'un circuit chauffant de balai d'essuie-glace de véhicule automobile, comportant un module de régulation de l'alimentation électrique du circuit chauffant, muni d'une entrée de connexion à un générateur d'énergie électrique et d'une sortie de connexion aux bornes d'un dit circuit chauffant d'un balai d'essuie-glace. Conformément à l'invention, ce dispositif de commande se caractérise par le fait qu'il comporte des moyens d'acquisition, à un instant t, d'une donnée représentative d'une température extérieure au véhicule d'une part et d'une donnée représentative de la vitesse instantanée du véhicule d'autre part, lesdits moyens d'acquisition étant configurés pour transmettre ces données au module de régulation.

Le dispositif de commande de la présente invention présente l'avantage d'être entièrement autonome et ainsi de pouvoir être monté sur des véhicules non équipés d'origine avec des balais d'essuie-glace munis d'un circuit chauffant.

Ce dispositif de commande comporte un module de régulation raccordable en entrée à une source d'énergie électrique telle que la batterie du véhicule par tous moyens appropriés ainsi qu'aux bornes du circuit chauffant de dits balais d'essuie-glace. Il est ainsi possible pour un consommateur d'équiper son véhicule de balais d'essuie-glace à circuit chauffant pour les périodes hivernales, comme il peut le faire pour les pneumatiques de son véhicule, afin d'optimiser et sécuriser sa conduite dans les conditions climatiques particulières de cette période.

Le dispositif de commande de l'invention s'avère particulièrement avantageux en ce qu'il permet en outre une régulation optimisée de l'alimentation électrique du circuit chauffant des balais d'essuie-glace par la prise en compte, pour l'alimentation du circuit chauffant, des paramètres de température externe et de vitesse du véhicule, indépendamment d'une quelconque connexion au calculateur électronique et au circuit électrique du véhicule.

Ainsi, une fois le dispositif raccordé en entrée à la batterie du véhicule ou tout autre source d'énergie électrique et en sortie aux bornes du circuit chauffant du ou des balais d'essuie-glace, celui-ci peut piloter de manière autonome la chauffe du circuit chauffant en acquérant, à un instant t donné, la température extérieure au véhicule et la vitesse instantanée de celui-ci, et en modulant l'alimentation électrique du circuit chauffant en conséquence. On assure ainsi une alimentation optimisée et sécurisée du circuit chauffant, garantissant l'intégrité dudit circuit et du ou des balais associés.

Selon l'invention, le dispositif comporte un boîtier étanche à l'intérieur duquel sont agencés le module de régulation et les moyens d'acquisition d'une donnée représentative de la vitesse instantanée du véhicule au moins, lesdites entrée et sortie de connexion du module de régulation étant agencées pour être accessibles à l'extérieur dudit boitier.

Dans une forme de réalisation, les moyens d'acquisition d'une donnée représentative de la vitesse instantanée du véhicule comportent un module de positionnement par satellite.

Avantageusement, les moyens d'acquisition d'une donnée représentative d'une température extérieure au véhicule comportent une sonde de température.

Selon une forme de réalisation préférée, les moyens d'acquisition d'une donnée représentative d'une température extérieure au véhicule et/ou les moyens d'acquisition d'une donnée représentative de la vitesse instantanée du véhicule sont intégrés au module de régulation électrique.

Plus particulièrement, le module de régulation électrique peut notamment comporter une carte électronique sur laquelle sont agencés des composants d'un circuit de régulation électronique, un module de positionnement par satellite et, de préférence, une sonde de température. Un tel module de régulation peut être réalisé sous la forme d'une puce électronique de très faible encombrement, qui une fois conditionnée dans un packaging de protection approprié ne dépasse pas quelques centimètres carrés et quelques millimètres d'épaisseur. Il est alors très simple de pouvoir disposer le dispositif de commande de l'invention sous les portes balais par exemple, ou toute autre zone sous le capot de véhicule, sans requérir d'aménagements spatiaux particuliers pour recevoir le dispositif.

Selon une caractéristique avantageuse du dispositif de commande de l'invention, le module de positionnement par satellite et/ou la sonde de température constituent un ou des interrupteur(s) du module de régulation électronique. En effet, le module de régulation est avantageusement configuré pour intégrer les données représentatives de température et de vitesse comme conditions d'entrée à son fonctionnement. Ainsi, si la température dépasse une certaine valeur seuil, par exemple 5°C, le module de régulation et le dispositif de commande de l'invention ne délivre aucune alimentation au circuit chauffant. Il peut également en être de même en cas de vitesse nulle le cas échéant. Il est enfin possible de combiner les deux conditions d'entrée température et vitesse pour définir différents régimes de régulation en fonction de la température externe du véhicule et de la vitesse de ce dernier.

A cet effet, le module de régulation électrique comporte avantageusement dans un mode de réalisation préféré un microprocesseur et une mémoire dans laquelle est enregistré un programme informatique de régulation de l'alimentation électrique du circuit chauffant en fonction desdites données représentatives de température extérieure et de vitesse instantanée du véhicule. Le programme de régulation peut ainsi définir très simplement les différents régimes de régulation du circuit chauffant des balais d'essuie-glace comme précédemment évoqué

De façon avantageuse encore, le module de régulation du dispositif de commande de l'invention peut également être configuré pour analyser les propriétés de puissance et/ou de résistance du circuit chauffant et pour réguler l'alimentation électrique dudit circuit chauffant en conséquence.

Ainsi, le dispositif de commande de l'invention peut avantageusement analyser, lors de sa connexion aux bornes d'un circuit chauffant d'un balai d'essuie-glace, les propriétés électriques de ce circuit chauffant, et notamment déterminer la compatibilité dudit balai avec le dispositif de commande et, si compatible, les propriétés électriques d'alimentation appropriées.

L'invention concerne par ailleurs dans un second objet un ensemble prêt à monter comportant au moins un balai d'essuieglace équipé d'un circuit chauffant et un dispositif autonome de commande tel que précédemment décrit.

Un tel ensemble prêt à monter constitue pour le consommateur une solution clé en main d'équipement de son véhicule avec un ou plusieurs balais d'essuie-glace à circuit chauffant et un dispositif de commande autonome associé.

Dans une forme de réalisation avantageuse, le dispositif autonome de commande est agencé dans un boîtier étanche, lesdites entrée et sortie de connexion du module de régulation étant agencées pour être accessibles à l'extérieur dudit boitier pour son raccordement au circuit chauffant et à un générateur d'énergie électrique.

De préférence encore dans cette forme de réalisation, le boîtier comporte des moyens de protection et d'étanchéité desdites entrée et sortie de connexion du module de régulation. On prévient ainsi les risques de court-circuit au niveau des connexions électriques du dispositif de commande.

### BREVE DESCRIPTION DES FIGURES

D'autres caractéristiques et avantages de l'invention apparaitront au cours de la lecture de la description détaillée qui va suivre, faite à titre non limitatif et pour la compréhension de laquelle on se reportera aux dessins annexés dans lesquels :
- la figure 1 est une vue schématique du dispositif autonome de commande de la présente invention associé à une alimentation électrique et une paire de balais d'essuie-glace munis d'un circuit chauffant ;
- la figure 2 représente un exemple de mise en œuvre d'un dispositif autonome de commande selon la présente invention dans un véhicule automobile, représenté en vue perspective partielle ;
- la figure 3 représente à titre illustratif et non limitatif un exemple de régulation de la tension d'alimentation et des cycles de mise sous tension de circuits chauffants de balais d'essuieglace mis en œuvre par le dispositif de l'invention.

### DESCRIPTION DETAILLEE DES FIGURES

Dans la suite de la description, des éléments présentant une structure identique ou des fonctions analogues seront désignés par des mêmes références.

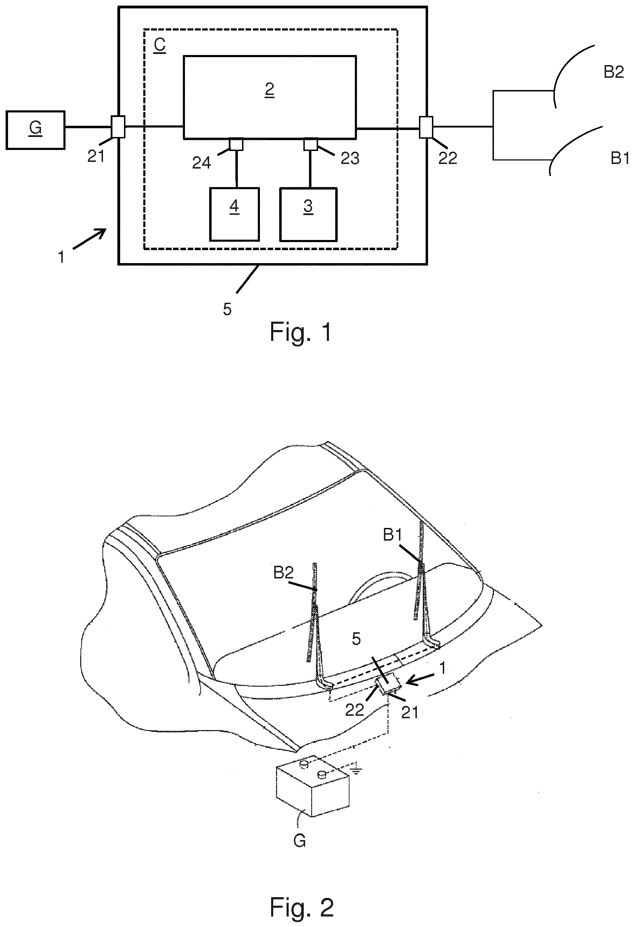

On a représenté sur la figure 1 sous une forme schématique simplifiée un dispositif 1 autonome de commande du circuit chauffant de balais d'essuie-glace B1, B2 pour véhicules automobiles. Ce dispositif 1 a été conçu et développé afin de piloter de manière autonome, c'est-à-dire indépendamment de tout autre dispositif ou système électronique, notamment de calculateur et capteurs existants d'un véhicule automobile, la température de chauffe des balais chauffants sur un véhicule non équipé d'origine de tels balais.

De tels balais d'essuie-glace à circuits chauffants sont aujourd'hui notamment utilisés sur des véhicules haut de gamme et dans des zones géographiques au climat rigoureux, où les températures extérieures sont fréquemment inférieures à 5°C et même négatives et où donc neige et gel fréquents peuvent altérer les conditions de visibilité, donc de circulation des véhicules automobiles.

Une alimentation efficace des circuits chauffants de tels balais d'essuie-glace requiert, pour éviter la une détérioration trop rapide des balais, notamment des pistes résistives chauffantes et des lames de ceux-ci, ainsi qu'une consommation électrique trop importante, une connaissance des paramètres de température extérieure, de la vitesse du véhicule, et la résistance et/ou la puissance électrique des pistes résistives formant lesdits circuits chauffants.

Aussi des tels balais d'essuie-glace à circuits chauffants sont essentiellement montés en tant qu'équipements de série de véhicules, le pilotage électronique de l'alimentation des circuits chauffants étant prédéfini à l'avance par le constructeur dans le calculateur du véhicule, auquel les circuits chauffants des balais sont raccordés électriquement, notamment afin de s'assurer que l'intensité d'alimentation soit adaptée à la résistance des circuits chauffants, dépendante usuellement de la longueur des balais.

Le dispositif 1 de l'invention vise à procurer une solution adaptée pour rendre « universel » l'usage de balais d'essuieglace à circuit chauffant, c'est-à-dire aussi bien en première monte comme équipement d'origine sur des véhicules automobiles qu'en seconde monte sur tout type de véhicule non équipé d'origine.

Comme cela ressort de la figure 1 le dispositif 1 de l'invention est un dispositif de commande et de pilotage autonome comportant un module 2 de régulation électrique de l'alimentation du circuit chauffant de balais d'essuie-glace B1, B2.

Ce module de régulation 2 comporte une entrée 21 de connexion à un générateur d'énergie électrique G telle que la batterie d'un véhicule automobile. Cette entrée 21 de connexion à la batterie G du véhicule comporte avantageusement une fiche de connexion standardisée.

De plus, le module 2 de régulation comporte également une sortie 22 de connexion aux bornes du circuit chauffant (non représenté) de chaque balai d'essuie-glace B1, B2. Cette sortie 22 de connexion aux circuits chauffants des balais B1, B2 du véhicule comporte elle aussi avantageusement une ou plusieurs fiche(s) de connexion standardisée en fonction du nombre de balais à connecter. La sortie 22 pourra ainsi comporter deux ou trois fiches de connexion si autant de balais sont à connecter au dispositif 1.

A titre d'exemple de balais d'essuie-glace B1, B2 équipés de circuits chauffants, on peut citer les balais du type décrit dans les demandes de brevets US 2011016653 ou US 2013269142 au nom de la Demanderesse.

Le module de régulation 2 présente une structure électronique, non représentée sur les figures, intégrant notamment au moins un circuit de redressement, un circuit de filtrage et un circuit de régulation de tension en tant que tel.

Ces différents composants peuvent notamment être intégrés sur une carte électronique C et reliés entre eux par un circuit imprimé, lequel connecte également l'entrée 21 et sortie 22 du module de régulation 2.

Afin de conférer au dispositif 1 de l'invention son caractère autonome de commande du circuit chauffant des balais B1, B2 celui-ci comporte avantageusement des moyens d'acquisition, à un instant t, d'une donnée représentative d'une température extérieure au véhicule ainsi que des moyens d'acquisition d'une donnée représentative de la vitesse instantanée du véhicule, lesdits moyens d'acquisition étant configurés et agencés dans le dispositif 1 pour transmettre ces données au module de régulation 2.

Plus particulièrement, les moyens d'acquisition d'une donnée représentative de la température extérieure comprennent avantageusement une sonde de température 3, reliée électriquement à une entrée 23 du module de régulation. Cette sonde de température 3 peut être notamment une sonde de type thermocouple ou encore une sonde thermorésistive, par exemple de type résistance de platine (référence PT) ou thermistance. Cette sonde de température 3 est connectée directement via l'entrée 23 au module de régulation 2 selon un câblage approprié en fonction du type de sonde.

Les moyens d'acquisition d'une donnée représentative de la vitesse instantanée du véhicule comportent quant à eux de préférence un module 4 de positionnement par satellite. Ce module 4 de positionnement par satellite peut être un module fonctionnel indépendant, relié par un bus d'alimentation et de transmission de données au module de régulation à une entrée 24 du module de régulation 2.

Alternativement, le module 4 de positionnement par satellite peut être réalisé sous la forme d'un circuit intégré directement positionné et câblé sur la carte électronique C du module de régulation 2.

Par souci de clarté la figure 1 représente simplement sous forme de schéma fonctionnel le module 2 de régulation, la sonde de température 3 et le module 4 de positionnement par satellite interconnectés les uns aux autres, le module de régulation 2 recevant en ses entrées 21, 23, 24 respectivement l'alimentation du générateur G, une donnée de température externe de la sonde de température 3 et une vitesse instantanée à un instant t par le module de positionnement par satellite 4. En sortie 22, le module de régulation 2 (et ainsi le dispositif 1 de l'invention) est connecté directement aux circuits chauffants (non représentés) des balais d'essuie-glace B1, B2.

Pour garantir l'intégrité du dispositif 1 de commande est de pilotage l'ensemble des composants électroniques de celui-ci et notamment le module de régulation 2, ainsi de préférence que la sonde de température 3 et le module de positionnement par satellite 4 sont intégrés dans un boîtier étanche 5, sur la surface extérieure duquel seules les entrée et sortie 21, 22 de connexion du module de régulation 2 sont accessibles pour permettre la connexion du boîtier 5 à la batterie G du véhicule d'une part et aux balais d'essuie-glace B1, B2 d'autre part.

Le boitier 5 peut être de formes et dimensions variées, en fonction bien entendu de la compacité de son électronique intégrée et des connecteurs entrée et sortie 21, 22 du module de régulation 2. Toutefois de manière préférentielle celui-ci présente des dimensions maximales de l'ordre de quelques millimètre à centimètres au plus afin de permettre l'intégration aisée du dispositif de commande et pilotage 1 directement sur un porte balais d'essuie-glace ou encore logé sous le capot dans la carrure interne du compartiment moteur du véhicule, comme représenté sur la figure 2.

Afin de faciliter son installation, le boitier 5 comporte avantageusement des moyens de fixation réversible, par exemple de type adhésif ou à encliquetage, afin de procurer une installation aisée par un opérateur ou le propriétaire du véhicule lui-même.

Une fois connecté à la batterie G du véhicule et aux circuits chauffants des balais B1, B2 comme représenté sur la figure 2 le dispositif 1 de commande de l'invention est ainsi parfaitement autonome dans son fonctionnement et peut ainsi être mis en œuvre sur tout type de véhicule, que ce soit en série ou en seconde monte, pour autant qu'un câblage approprié soit procuré pour opérer une connexion du dispositif 1 aux entrée 21 et sortie 22 du module de régulation 2.

Il est ainsi très aisé d'équiper un véhicule de balais B1, B2 dotés de circuits chauffants au gré des besoins et de piloter le fonctionnement des circuits chauffants par l'intermédiaire du dispositif 1 de l'invention connecté à ceux-ci et la batterie G du véhicule.

Un aspect de la présente invention consiste d'ailleurs à procurer un ensemble prêt à monter comportant au moins un balai d'essuie-glace, ou un couple de balais d'essuie-glace B1, B2 équipé d'un circuit chauffant et un dispositif autonome de commande 1.

Pour permettre un pilotage optimal des circuits chauffants des balais B1, B2 le module de régulation 2 du dispositif 1 comporte avantageusement un microprocesseur et une mémoire (non représenté sur les figures) dans laquelle est enregistré un programme informatique de régulation de l'alimentation électrique des circuits chauffants en fonction des données de température extérieure et de vitesse instantanée du véhicule transmises par la sonde 3 et le module 4.

Le programme de régulation peut ainsi définir très simplement différents régimes de régulation de l'alimentation électrique du circuit chauffant des balais d'essuie-glace B1, B2 en fonction des conditions d'utilisation du véhicule, aussi bien la température extérieure que la vitesse instantanée de celui-ci, à un instant t.

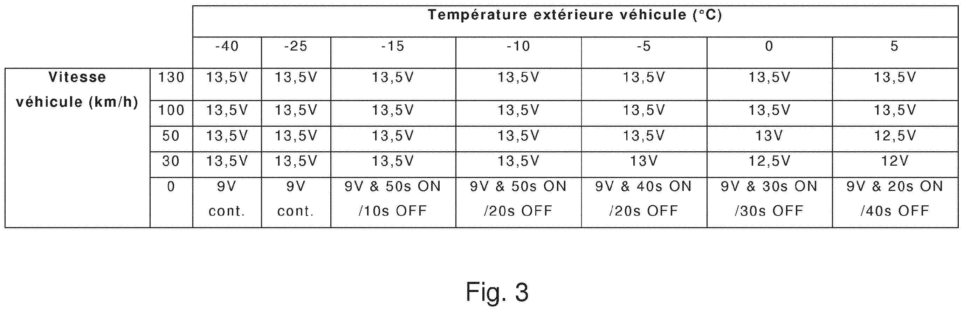

La figure 3 présente, à titre purement indicatif et non limitatif de la portée de la présente invention, un exemple de cycles de régulation de l'alimentation de balais chauffants en fonction de valeurs de températures extérieures et de vitesses du véhicule. De tels cycles de régulation peuvent être implémentés de manière extrêmement simple et fiable dans un algorithme de programmation dans tout langage approprié et enregistré dans la mémoire du module de régulation. Le microprocesseur communique alors avec la mémoire pour opérer le programme y enregistré et ainsi, en fonction des données reçues de la sonde de température 3 et du module de positionnement par satellite 4, piloter le circuit de régulation pour que celui-ci délivre l'alimentation adaptée, en tension, en intensité et selon la temporisation adaptée à la sortie 22 du module de régulation 2.

Ainsi, en référence à la figure 3, si la sonde de température 3 transmet au module de régulation 2 que la température extérieure est de -10°C et que le module de positionnement par satellite 4 calcule que le véhicule roule à 100km/h, le module de régulation 2 délivre alors un signal d'alimentation d'une tension de 13,5V en continu à sa sortie 22 aux balais B1, B2.

De manière analogue, si le véhicule est à l'arrêt, par exemple dans un bouchon ou à un feu de circulation, donc à vitesse nulle, et que la température extérieure est de -5°C, le module de régulation 2 délivre alors, un signal d'alimentation d'une tension de 9V pendant 40 secondes puis stoppe pendant 20 secondes et répète ce cycle aussi longtemps que la vitesse du véhicule n'atteint pas le seuil de vitesse supérieur de 30 km/h du programme de régulation. Dans ce cas, l'horloge du microprocesseur ou annexe peut servir au décompte de la durée de d'ouverture, respectivement fermeture, de l'alimentation en sortie 22 du module de régulation 2.

En revanche, si la mesure de la température ambiante par la sonde de température 3 est supérieure à 5°C, le module de régulation 2 coupe l'alimentation électrique des balais B1, B2 pour ne pas faire chauffer inutilement leurs circuits chauffants respectifs. La sonde de température 3, qui fournit une donnée d'entrée conditionnelle au fonctionnement du module de régulation 2, agit donc avantageusement comme un interrupteur du dispositif d'alimentation 1.

De façon analogue, on peut également envisager de configurer ou programmer le module de régulation 2, en particulier si celui-ci est piloté suivant un programme enregistré dans une mémoire par un microprocesseur comme précédemment indiqué, pour que le module de positionnement par satellite 4 agisse lui aussi comme un interrupteur du module de régulation, par exemple lors d'un arrêt prolongé du véhicule alors que le contact moteur est encore actif. Là aussi, la durée avant coupure peut être calculée via l'horloge du microprocesseur ou une horloge annexe intégrée au module de régulation 2.

De façon avantageuse, le module de régulation 2 est également configuré pour analyser les propriétés de puissance électrique et/ou de résistance des circuits chauffants des balais B1, B2, afin d'adapter l'intensité du signal d'alimentation délivré en sortie 22, qui dépend de la longueur du circuit chauffant, en fonction de cette résistance.

Ainsi, lors de la connexion des balais d'essuie-glace B1, B2, le module de régulation 2 peut détecter un changement d'état du circuit électrique à sa sortie 22. Cette détection induit automatiquement l'initiation d'un cycle de test par le microprocesseur destiné à analyser les propriétés électriques des circuits chauffants de chacun des balais pour assurer en fonction la fourniture d'un courant adapté pour respecter l'intégrité de ces circuits chauffants.

Cette phase de test circuit lors de la connexion de nouveaux balais B1, B2, peut également permettre de déterminer la compatibilité du ou des dits balais B1, B2 avec le dispositif de commande 1 et ainsi prévenir l'utilisation de balais non-compatibles pour éviter notamment toute perturbation générale du circuit électrique du véhicule.

Cette phase de test peut également de façon avantageuse constituer une phase d'authentification des balais B1, B2 pour s'assurer de leur origine, par l'identification d'une réponse électrique déterminée à un signal stimulus transmis par le module de régulation 2 à la connexion des balais B1, B2 au dispositif 1 de commande de l'invention.

La présente invention procure ainsi une solution simple et surtout autonome de commande du circuit chauffant de balais d'essuie-glace permettant l'utilisation de tels balais en deuxième monte sur tout type de véhicule automobile.

## Revendications

1. Dispositif (1) autonome de commande d'un circuit chauffant d'un balai d'essuie-glace (B1, B2) de véhicule automobile, comportant un module de régulation (2) de l'alimentation électrique du circuit chauffant, muni d'une entrée (21) de connexion à un générateur d'énergie électrique (G) et d'une sortie (22) de connexion aux bornes d'un dit circuit chauffant d'un balai d'essuie-glace (B1, B2), comportant des moyens d'acquisition (3, 4), à un instant t, d'une donnée représentative d'une température extérieure au véhicule d'une part et d'une donnée représentative de la vitesse instantanée du véhicule d'autre part, lesdits moyens d'acquisition (3, 4) étant configurés pour transmettre ces données au module de régulation (2) **caractérisé en ce qu'**il comporte un boîtier (5) étanche à l'intérieur duquel sont agencés le module de régulation (2) et les moyens d'acquisition (4) d'une donnée représentative de la vitesse instantanée du véhicule au moins, lesdites entrée et sortie de connexion (21, 22) du module de régulation étant agencées pour être accessibles à l'extérieur dudit boitier (5).

2. Dispositif autonome selon la revendication 1, **caractérisé en ce que** les moyens d'acquisition d'une donnée représentative de la vitesse instantanée du véhicule comportent un module (4) de positionnement par satellite.

3. Dispositif autonome selon l'une des revendications 1 ou 2, **caractérisé en ce que** les moyens d'acquisition d'une donnée représentative d'une température extérieure au véhicule comportent une sonde de température (3).

4. Dispositif autonome selon l'une des revendications 1 à 3, **caractérisé en ce que** les moyens d'acquisition (3) d'une donnée représentative d'une température extérieure au véhicule et/ou les moyens d'acquisition (4) d'une donnée représentative de la vitesse instantanée du véhicule sont intégrés au module de régulation électrique (2).

5. Dispositif autonome selon l'une des revendications 1 à 4, **caractérisé en ce que** le module de régulation électrique (2) comporte une carte électronique (C) sur laquelle sont agencés des composants d'un circuit de régulation électronique, un module de positionnement par satellite (4) et, de préférence, une sonde de température (3).

6. Dispositif autonome selon la revendication 5, **caractérisé en ce que** le module de positionnement par satellite (4) et/ou la sonde de température (3) constituent un (des) interrupteur(s) du circuit de régulation électronique.

7. Dispositif autonome selon l'une des revendications 5 ou 6, **caractérisé en ce que** le module de régulation électrique (2) comporte un microprocesseur et une mémoire dans laquelle est enregistré un programme informatique de régulation de l'alimentation électrique du circuit chauffant en fonction desdites données représentatives de température extérieure et de vitesse instantanée du véhicule.

8. Dispositif autonome selon l'une des revendications 1 à 7, **caractérisé en ce que** le module de régulation (2) est configuré pour analyser les propriétés de puissance et/ou de résistance du circuit chauffant et pour réguler l'alimentation électrique dudit circuit chauffant en conséquence.

9. Ensemble prêt à monter comportant au moins un balai d'essuie-glace (B1, B2) équipé d'un circuit chauffant et un dispositif autonome de commande (1) selon l'une des revendications 1 à 8.

10. Ensemble prêt à monter selon la revendication 9, **caractérisé en ce que** le dispositif autonome de commande (1) est agencé dans un boîtier étanche (5), lesdites entrée et sortie de connexion (21, 22) du module de régulation (2) étant agencées pour être accessibles à l'extérieur dudit boitier (5) pour son raccordement au circuit chauffant et à un générateur d'énergie électrique (G).

11. Ensemble prêt à monter selon la revendication 10, **caractérisé en ce que** le boîtier (5) comporte des moyens de protection et d'étanchéité desdites entrée et sortie de connexion (21, 22) du module de régulation (2).

## Patentansprüche

1. Autonome Vorrichtung (1) zur Steuerung eines Heizkreises eines Scheibenwischerblattes (B1, B2) eines Kraftfahrzeugs, umfassend ein Modul zur Regelung (2) der Stromversorgung des Heizkreises, versehen mit einem Eingang (21) für den Anschluss an einen Erzeuger elektrischer Energie (G) und einem Ausgang (22) für den Anschluss an die Klemmen eines solchen Heizkreises eines Scheibenwischerblattes (B1, B2), umfassend Mittel zur Erfassung (3, 4), zu einem Zeitpunkt t, einerseits eines Datenelements, das für eine Außentemperatur des Fahrzeugs repräsentativ ist, und andererseits eines Datenelements, das für die momentane Geschwindigkeit des Fahrzeugs repräsentativ ist, wobei die Erfassungsmittel (3, 4) dazu konfiguriert sind, diese Datenelemente an das Regelungsmodul (2) zu übertragen, **dadurch gekennzeichnet, dass** sie ein dichtes Gehäuse (5) umfasst, in dessen Inneren das Regelungsmodul (2) und die Mittel zur Erfassung (4) eines Datenelements, das mindestens für die momentane Geschwindigkeit des Fahrzeugs repräsentativ ist, angeordnet sind, wobei der Anschlusseingang und -ausgang (21, 22) des Regelungsmoduls so angeordnet sind, dass sie außerhalb des Gehäuses (5) zugänglich sind.

2. Autonome Vorrichtung nach Anspruch 1, **dadurch gekennzeichnet, dass** die Mittel zur Erfassung eines Datenelements, das für die momentane Geschwindigkeit des Fahrzeugs repräsentativ ist, ein Modul (4) zur satellitengestützten Positionierung umfassen.

3. Autonome Vorrichtung nach einem der Ansprüche 1 oder 2, **dadurch gekennzeichnet, dass** die Mittel zur Erfassung eines Datenelements, das für eine Außentemperatur des Fahrzeugs repräsentativ ist, einen Temperaturfühler (3) umfassen.

4. Autonome Vorrichtung nach einem der Ansprüche 1 bis 3, **dadurch gekennzeichnet, dass** die Mittel zur Erfassung (3) eines Datenelements, das für eine Außentemperatur des Fahrzeugs repräsentativ ist, und/oder die Mittel zur Erfassung (4) eines Datenelements, das für die momentane Geschwindigkeit des Fahrzeugs repräsentativ ist, in das elektrische Regelungsmodul (2) integriert sind.

5. Autonome Vorrichtung nach einem der Ansprüche 1 bis 4, **dadurch gekennzeichnet, dass** das elektrische Regelungsmodul (2) eine Leiterplatte (C) umfasst, auf der Komponenten eines elektronischen Regelkreises, ein Modul zur satellitengestützten Positionierung (4) und vorzugsweise ein Temperaturfühler (3) angeordnet sind.

6. Autonome Vorrichtung nach Anspruch 5, **dadurch gekennzeichnet, dass** das Modul zur satellitengestützten Positionierung (4) und/oder der Temperaturfühler (3) einen (mehrere) Schalter des elektronischen Regelkreises bilden.

7. Autonome Vorrichtung nach einem der Ansprüche 5 oder 6, **dadurch gekennzeichnet, dass** das elektrische Regelungsmodul (2) Folgendes umfasst: einen Mikroprozessor und einen Speicher, in dem ein EDV-Programm zur Regelung der Stromversorgung des Heizkreises in Abhängigkeit von den Datenelementen, die für die Außentemperatur und die momentane Geschwindigkeit des Fahrzeugs repräsentativ sind, aufgezeichnet ist.

8. Autonome Vorrichtung nach einem der Ansprüche 1 bis 7, **dadurch gekennzeichnet, dass** das Regelungsmodul (2) dazu konfiguriert ist, die Leistungs- und/oder Widerstandseigenschaften des Heizkreises zu analysieren und die Stromversorgung des Heizkreises demgemäß zu regeln.

9. Einbaufertige Anordnung, die mindestens ein Scheibenwischerblatt (B1, B2), das mit einem Heizkreis ausgerüstet ist, und eine autonome Steuerungsvorrichtung (1) nach einem der Ansprüche 1 bis 8 umfasst.

10. Einbaufertige Anordnung nach Anspruch 9, **dadurch gekennzeichnet, dass** die autonome Steuerungsvorrichtung (1) in einem dichten Gehäuse (5) angeordnet ist, wobei der Anschlusseingang und -ausgang (21, 22) des Regelungsmoduls (2) so angeordnet sind, dass sie außerhalb des Gehäuses (5) zugänglich sind, um dieses mit dem Heizkreis und einem Erzeuger elektrischer Energie (G) zu verbinden.

11. Einbaufertige Anordnung nach Anspruch 10, **dadurch gekennzeichnet, dass** das Gehäuse (5) Mittel zum Schutz und zur Abdichtung des Anschlusseingangs und -ausgangs (21, 22) des Regelungsmoduls (2) umfasst.

## Claims

1. Autonomous device (1) for controlling a heating circuit of a windscreen wiper blade (B1, B2) of a motor vehicle, comprising a module (2) for regulating the electrical power supply of the heating circuit, provided with an input (21) for connecting to an electrical power generator (G) and with an output (22) for connecting to the terminals of said heating circuit of a windscreen wiper blade (B1, B2), comprising means (3, 4) for acquiring, at an instant t, a data item representing a temperature outside the vehicle, on the one hand, and a data item representing the instantaneous speed of the vehicle, on the other hand, said acquisition means (3, 4) being configured to transmit said data to the regulation module (2), **characterized in that** it comprises a sealed casing (5), inside which the regulation module (2) and the means (4) for acquiring a data item representing the instantaneous speed of the vehicle are at least arranged, with said connection input and output (21, 22) of the regulation module being arranged in order to be accessible on the outside of said casing (5).

2. Autonomous device according to Claim 1, **characterized in that** the means for acquiring a data item representing the instantaneous speed of the vehicle comprise a satellite positioning module (4).

3. Autonomous device according to either of Claims 1 and 2, **characterized in that** the means for acquiring a data item representing a temperature outside the vehicle comprise a temperature probe (3).

4. Autonomous device according to one of Claims 1 to 3, **characterized in that** the means (3) for acquiring a data item representing a temperature outside the vehicle and/or the means (4) for acquiring a data item representing the instantaneous speed of the vehicle are integrated in the electrical regulation module (2).

5. Autonomous device according to one of Claims 1 to 4, **characterized in that** the electrical regulation module (2) comprises an electronic board (C), on which components of an electronic regulation circuit, a satellite positioning module (4) and, preferably, a temperature probe (3) are arranged.

6. Autonomous device according to Claim 5, **characterized in that** the satellite positioning module (4) and/or the temperature probe (3) form one or more switches of the electronic regulation circuit.

7. Autonomous device according to either of Claims 5 and 6, **characterized in that** the electrical regulation module (2) comprises a microprocessor and a memory, in which memory a computer program is stored for regulating the electrical power supply of the heating circuit as a function of said data items representing the outside temperature and the instantaneous speed of the vehicle.

8. Autonomous device according to one of Claims 1 to 7, **characterized in that** the regulation module (2) is configured to analyse the power and/or resistance properties of the heating circuit and to regulate the electrical power supply of said heating circuit accordingly.

9. Assembly kit comprising at least one windscreen wiper blade (B1, B2) equipped with a heating circuit and an autonomous control device (1) according to one of Claims 1 to 8.

10. Assembly kit according to Claim 9, **characterized in that** the autonomous control device (1) is arranged in a sealed casing (5), with said connection input and output (21, 22) of the regulation module (2) being arranged in order to be accessible on the outside of said casing (5) so that it can be connected to the heating circuit and to an electrical power generator (G).

11. Assembly kit according to Claim 10, **characterized in that** the casing (5) comprises means for protecting and sealing said connection input and output (21, 22) of the regulation module (2).
